# EUROPÄISCHE PATENTSCHRIFT

(11) **EP 4 215 832 B1**
(45) Veröffentlichungstag und Bekanntmachung des Hinweises auf die Patenterteilung: **20.08.2025**
(21) Anmeldenummer: 23152643.5
(22) Anmeldetag: 20.01.2023
(51) Int. Cl.: F24F 11/38, F24F 11/64, F24F 11/89, F24F 1/40, G01M 13/028, G01M 13/045, F24F 140/00, F24F 11/30

(54) **VERFAHREN ZUM ÜBERPRÜFEN DES VERSCHLEISSZUSTANDES VON SCHWINGUNGSDÄMPFERN EINES KLIMAGERÄTES, COMPUTERPROGRAMM, REGEL- UND STEUERGERÄT UND KLIMAGERÄT**
METHOD FOR CHECKING THE WEAR STATE OF VIBRATION DAMPERS OF AN AIR CONDITIONING DEVICE, COMPUTER PROGRAM, CONTROL DEVICE AND AIR CONDITIONING DEVICE
PROCÉDÉ DE VÉRIFICATION DE L'ÉTAT D'USURE D'AMORTISSEURS DE VIBRATIONS D'UN APPAREIL DE CLIMATISATION, PROGRAMME INFORMATIQUE, APPAREIL DE RÉGULATION ET DE COMMANDE ET APPAREIL DE CLIMATISATION

(30) Priorität: 24.01.2022 DE 102022101501
(43) Veröffentlichungstag der Anmeldung: 26.07.2023
(73) Patentinhaber: Vaillant GmbH, 42859 Remscheid NRW (DE)
(72) Erfinder: Mohrenz, Christian, 45549 Sprockhövel (DE); Jagos, Meik, 42651 Solingen (DE)
(74) Vertreter: Popp, Carsten

(56) Entgegenhaltungen:
- WO-A1-2009/127428
- WO-A1-2017/167616
- CN-B- 105 042 828
- DE-A1- 19 702 234
- US-A1- 2013 308 674
- US-B1- 10 890 121
- ULRICH KLEIN: "2.4 Aspekte schwingungsdiagnostischer Überwachung", 30 November 1999, SCHWINGUNGSDIAGNOSTISCHE BEURTEILUNG VON MASCHINEN UND ANLAGEN, VERL. STAHLEISEN, DÜSSELDORF, PAGE(S) 11 - 13, ISBN: 978-3-514-00663-8, XP009542452

## Beschreibung

Die Erfindung betrifft ein Verfahren zum Überprüfen des Verschleißzustandes von Vibrations- bzw. Schwingungsdämpfern eines Klimagerätes, ein Computerprogramm, ein Regel- und Steuergerät und ein Klimagerät.

Klimageräte können beispielsweise Wärmepumpen oder Klimaanlagen sein, wobei Wärmepumpen sich unter anderem für die Wärmeversorgung von Gebäuden aufgrund der geringen Emissionen zunehmender Beliebtheit erfreuen. Ebenso wie Klimaanlagen, umfassen Wärmepumpen in der Regel einen Kältekreislauf, wobei häufig bei sogenannten Split-Geräten ein Innenteil des Klimagerätes in einem zu versorgenden Gebäude und ein Außenteil außerhalb des Gebäudes angeordnet sein können, wobei Innenteil und Außenteil durch einen Kältemittelkreis zum Wärmetransport verbunden sind. Häufig wird der Phasenwechsel des Kältemittels im Kältemittelkreis in den Wärmetransport einbezogen. Zur Gewährleistung eines Druckunterschiedes für einen Phasenwechsel in einem Verflüssiger (Kondensator) und einem Verdampfer weist der Kältemittelkreis regelmäßig einen Verdichter (häufig auch als Kompressor bezeichnet) auf.

Um einen Wärmeaustausch mit der Umgebungsluft durch erzwungene Konvektion bei einer Luftwärmepumpe zu unterstützen, weisen deren Außenteile in der Regel ein Gebläse auf, das Umgebungsluft durch einen Wärmetauscher fördern kann. Gebläse und Verdichter, bzw. der den Verdichter antreibende Elektromotor sind im Wesentlichen für das Betriebsgeräusch und auftretende Betriebsvibrationen eines Klimagerätes verantwortlich. Außenteile von Klimageräten können in Abhängigkeit der örtlichen Gegebenheiten auf dem Boden, auf dem Dach und/ oder an einer Hausfassade installiert werden.

Um die Geräuschemissionen eines Außenteils eines Klimagerätes zu minimieren, weisen diese in der Regel Schwingungsdämpfer auf, die zwischen dem Klimagerät und einer Schnittstelle des Installationsortes angeordnet sein können, und die eine Übertragung der Betriebsvibrationen des Außenteils mindern. Die Schwingungsdämpfer unterliegen dabei einem Verschleiß, dessen Fortschreiten unter anderem von der Anzahl der Lastwechsel, Witterungseinflüssen wie Temperaturwechsel, UV- (Ultraviolett-) Strahlung, Ozonbelastung und/ oder dem Alter des Materials beeinflusst wird. Die Notwendigkeit eines Austausches bzw. einer Wartung der Schwingungsdämpfer kann daher in Abhängigkeit der konkreten Bedingungen nach unterschiedlichen Zeiträumen auftreten.

Ein Verschleiß der Schwingungsdämpfer führt zu einer erhöhten mechanischen Belastung des Klimagerätes sowie zu erhöhten Schallemissionen, die insbesondere bei Wohngebäuden als störend empfunden werden können. Daher sind eine regelmäßige Wartung und gegebenenfalls ein Austausch der Schwingungsdämpfer notwendig. Leider kann der Verschleißzustand der Schwingungsdämpfer nur schwer festgestellt werden, so dass diese häufig auf Verdacht ausgetauscht werden. Dies erfordert erheblichen Aufwand und gegebenenfalls unnötige Kosten, bei einem vorzeitigen Austausch.

Die WO 2009/ 127428 A1 beschreibt eine gattungsfremde Vorrichtung und ein gattungsfremdes Verfahren zum Erkennen von Schäden an einer Arbeitsmaschine. Als Arbeitsmaschinen werden Baumaschinen wie Fugenschneider, Bodentrennschleifmaschinen, Hämmer Vibrationsplatten, -walzen sowie Stampfer genannt.

Hiervon ausgehend ist es Aufgabe der Erfindung, ein Verfahren zum Überprüfen des Verschleißzustandes von Schwingungsdämpfern eines Klimagerätes vorzuschlagen, das die geschilderten Probleme des Standes der Technik zumindest teilweise überwindet. Insbesondere soll ein rechtzeitiger Austausch bzw. eine rechtzeitige Instandsetzung ermöglicht werden aber gleichzeitig auch eine unnötige und vorzeitige Instandsetzung vermieden werden.

Zudem soll die Erfindung die Komplexität eines Klimagerätes zumindest nicht wesentlich erhöhen und nur geringe bauliche Veränderungen an einem Klimageräte erfordern.

Diese Aufgaben werden gelöst durch die Merkmale der unabhängigen Patentansprüche. Weitere vorteilhafte Ausgestaltungen der hier vorgeschlagenen Lösung sind in den abhängigen Patentansprüchen angegeben. Es wird darauf hingewiesen, dass die in den Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Überprüfen des Verschleißzustandes von Schwingungsdämpfern, angeordnet zwischen dem Klimagerät und einer Schnittstelle des Installationsortes, eines Klimagerätes bei, umfassend zumindest die folgenden Schritte:
a) Erfassen von Daten eines Schwingungssensors beim Betreiben des Klimagerätes,
b) Vergleichen der in Schritt a) erfassten Daten des Schwingungssensors mit Referenzdaten,
c) Im Ergebnis des Vergleiches gemäß Schritt b) erfolgt ein Feststellen des Verschleißzustandes der Schwingungsdämpfer.

Die Schritte a), b) und c) können bei einem regulären Betriebsablauf mindestens einmal in der angegebenen Reihenfolge durchgeführt werden. Insbesondere können die Schritte a) bis c) regelmäßig in (vorbestimmten) zeitlichen Abständen (täglich, wöchentlich) durchgeführt werden. Das Verfahren dient insbesondere dem (automatisierten) Feststellen eines Verschleißzustandes von Schwingungsdämpfern eines Klimagerätes.

Die Bezeichnung Klimagerät kann eine Wärmepumpe, beispielsweise in Monoblock-Bauweise, oder auch einen Teil derselben umfassen, insbesondere ein Außenteil einer Split-Wärmepumpe. Gleichfalls kann das Klimagerät eine Klimaanlage, insbesondere ein Außenteil einer Klimaanlage, sein. Eine Wärmepumpe kann Umgebungswärme, beispielsweise aus Luft, Erde oder Grundwasser aufnehmen und zur Wärmeversorgung bzw. Warmwasserbereitstellung eines Gebäudes bereitstellen. Hierfür können ein Außenteil und ein Innenteil einer Wärmepumpe über einen Kältemittelkreis verbunden sein, wobei ein Kältemittel im Kältemittelkreis umgewälzt werden kann, das durch Phasenwechsel in einem Verdampfer bzw. Kondensator (Verflüssiger) Wärme transportiert. Die Wärmepumpe kann auch in Monoblock-Bauweise ausgestaltet sein und Außenteil und Innenteil in einem (außen aufzustellenden) Monoblock vereinen. Eine Klimaanlage kann dazu eingerichtet sein, Wärme aus einem Gebäude zu transportieren und dieses somit abkühlen. Hierzu kann eine Klimaanlage gleichfalls einen Außen- und einen Innenteil aufweisen, die durch einen Kältemittelkreis verbunden sein können. Auch der Außenteil einer Klimaanlage kann ein Gebläse umfassen, das Betriebsvibrationen verursacht, die durch analog zur Wärmepumpe angeordnete Schwingungsdämpfer gemindert werden können.

Zumeist werden Klimageräte in Abhängigkeit der Gegebenheiten am Installationsort auf dem Boden, beispielsweise auf einer Bodenplatte oder einem (Beton-)Fundament, auf einem (Flach)Dach, einer (Außen)wand eines Gebäudes oder auch in einem Gebäude (beispielsweise auf einem Dachboden) installiert. Die Schwingungsdämpfer dämpfen die Schwingungen des Klimagerätes selbst und/oder die über die Befestigung auf die Installationsschnittstelle übertragenen Schwingungen (teilweise). Eine Übertragung von Schwingungen auf die Installationsschnittstelle kann insbesondere bei Klimageräten, die mit einem Gebäude verbunden installiert sind, als sehr störend wahrgenommen werden.

Die Schwingungsdämpfer können dabei insbesondere zwischen dem Klimagerät und der Installationsschnittstelle angeordnet sein. Beispielsweise bei einer stehenden Installation kann das Klimagerät auf den Schwingungsdämpfern angeordnet werden, um diese von der Installationsschnittstelle (weitgehend) zu entkoppeln. Bei einer hängenden Installation, beispielsweise an einer Wand eines Gebäudes, können Schwingungsdämpfer derart in die Wandbefestigung integriert sein, dass eine (weitgehende) Entkopplung von Klimagerät und Wand erreicht werden kann. In der Regel kommen mindestens zwei Schwingungsdämpfer zum Einsatz, wobei die Anzahl im Wesentlichen von der Größe und Art des Klimagerätes abhängig ist. Ein hier vorgeschlagenes Verfahren dient insbesondere der Feststellung eines Verschleißzustandes aller Schwingungsdämpfer eines Klimagerätes.

Die Schwingungsdämpfer können beliebige Schwingungsdämpfer sein. Zumeist kommen bei Klimageräten Elastomer-Dämpfer zum Einsatz, die Vibrationen (Schwingungen) durch Verformung aufnehmen können und die Energie der Schwingungen in Wärme umwandeln.

Gemäß Schritt a) können Schwingungs- und/ oder Vibrations-Daten mindestens eines dem Klimagerät zugeordneten Schwingungssensors während des Betriebs des Klimagerätes erfasst werden. Das Erfassen kann dabei über einen (vordefinierten) Prüfzeitraum erfolgen. Im Prüfzeitraum sollten alle wesentlichen Schwingungen bzw. Vibrationen des Klimagerätes mindestens einmal auftreten, um eine sichere Feststellung des Verschleißzustandes zu ermöglichen. Die erfassten Daten können auf einem Speicher, beispielsweise eines verfahrensdurchführenden Regel- und Steuergerätes des Klimagerätes, hinterlegt werden bzw. sein.

Gemäß einer vorteilhaften Ausgestaltung können in Schritt a) auch Daten mehrerer, insbesondere an beabstandeten Positionen, beispielsweise an zwei gegenüberliegenden Seiten der Bodenplatte, im Klimagerät angeordneter Schwingungssensoren erfasst werden.

Der Schwingungssensor kann beispielsweise ein Beschleunigungssensor sein, der Beschleunigungskräfte erfassen kann. Weitere Beispiele für Sensoren zur Erfassung von Schwingungen bzw. zur Erfassung von Signalen aus denen sich eine Beschleunigung/ Schwingung ableiten lässt und die hier einzeln oder in Kombination miteinander eingesetzt werden können, sind Geschwindigkeitssensoren, Wegsensoren und/ oder Mikrofone.

Gemäß einer vorteilhaften Ausgestaltung kann der Schwingungssensor insbesondere im Bereich einer Bodenplatte, verbunden mit einer Bodenplatte oder einer tragenden Struktur im Bereich der Bodenplatte des Klimagerätes, angeordnet sein.

Gemäß Schritt b) kann ein Vergleichen der in Schritt a) erfassten Daten des Schwingungssensors mit (vordefinierten bzw. gespeicherten) Referenzdaten erfolgen. Die Referenzdaten können dabei Schwingungsamplituden in einem vordefinierten Frequenzspektrum sein, bei deren Überschreiten durch die in Schritt a) erfassten Daten ein Verschleiß bzw. notwendiger Austausch der Schwingungsdämpfer angezeigt wird. Auch die Referenzdaten können hierzu beispielsweise auf einem Speicher, beispielsweise eines verfahrensdurchführenden Regel- und Steuergerätes, des Klimagerätes hinterlegt sein. Insbesondere können die Referenzdaten Schwingungsamplituden in einem Frequenzspektrum umfassen, deren Überschreiten einen Verschleiß der Schwingungsdämpfer anzeigen kann.

Gemäß einer vorteilhaften Ausgestaltung des Verfahrens kann bei der Durchführung des Schrittes a) das Klimagerät in einem Referenzbetriebspunkt betrieben werden. Der Referenzbetriebspunkt kann dabei eine Vergleichbarkeit der erfassten Daten mit den Referenzdaten für die Durchführung des Schrittes b) gewährleisten. Gemäß einer weiteren Ausgestaltung können Referenzdaten für verschiedene Betriebspunkte vorliegen und/ oder ein funktionaler Zusammenhang zwischen dem Betriebspunkt des Klimagerätes zum Zeitpunkt der Durchführung des Schrittes a) und dem Referenzbetriebspunkt genutzt werden, um die erfassten Daten zu transformieren.

Im Rahmen des Vergleiches können die in Schritt a) erfassten Daten (automatisch) analysiert und bewertet werden. Beispielsweise können hierzu die Schwingungsamplituden in einem (vordefinierten) Frequenzspektrum ermittelt werden. Das vordefinierte Frequenzspektrum kann dabei Frequenzen einbeziehen, deren Auftreten ein Schädigungspotential für das Klimagerät haben bzw. Lärmemissionen verursachen kann. Ein Beispiel für derartige Frequenzen können Eigenfrequenzen des Klimagerätes sein.

Im Rahmen der Analyse und Bewertung der in Schritt a) erfassten Daten kann beispielsweise eine Fourier- Transformation, insbesondere eine Schnelle Fourier Transformation (FFT) durchgeführt werden, um die erfassten Daten in deren Frequenzanteile zu zerlegen.

Gemäß einer vorteilhaften Ausgestaltung kann in einem Schritt d) ein (zukünftiger oder aktueller) Zeitpunkt für einen Austausch der Schwingungsdämpfer bzw. einer unzureichenden funktionalen Eignung der Schwingungsdämpfer bestimmt werden. Dies kann im Rahmen des Vergleichs und der erfassten (und gegebenenfalls der Analyse und Bewertung) der in Schritt a) erfassten Daten mit den Referenzdaten erfolgen.

Gemäß einer weiteren vorteilhaften Ausgestaltung kann in einem Schritt e) eine Information über den in Schritt c) festgestellten Verschleißzustand der Schwingungsdämpfer und/ oder gegebenenfalls über den in Schritt d) ermittelten Zeitpunkt für einen Austausch über eine Anzeigeeinrichtung angezeigt und/ oder ein Netzwerk, insbesondere dem Internet, zum Abruf bereitgestellt und/ oder als Nachricht versandt werden. Beispielsweise kann die Information auf einem Appliance Interface des Klimagerätes oder auch auf einem Netzwerkspeicher (Cloud) zum Abruf bereitgestellt werden. Vorteilhaft kann so beispielsweise dem Nutzer/ Betreiber des Klimagerätes und/ oder einem Fachbetrieb eine Information über den Verschleißzustand oder einen Zeitpunkt für einen Austausch der Schwingungsdämpfer durch eine Nachricht übermittelt werden und der Fachbetrieb kann einen Termin zur Wartung und/ oder zum Austausch der Schwingungsdämpfer entsprechend planen und durchführen.

Nach einem weiteren Aspekt wird auch ein Computerprogramm vorgeschlagen, welches zur (zumindest teilweisen) Durchführung eines hier vorgestellten Verfahrens eingerichtet ist. Dies betrifft mit anderen Worten insbesondere ein Computerprogramm (-produkt), umfassend Befehle, die bei der Ausführung des Programms durch einen Computer, diesen veranlassen, ein hier vorgeschlagenes Verfahren auszuführen.

Nach einem weiteren Aspekt wird auch ein maschinenlesbares Speichermedium vorgeschlagen, auf dem das Computerprogramm gespeichert ist. Regelmäßig handelt es sich bei dem maschinenlesbaren Speichermedium um einen computerlesbaren Datenträger.

Nach einem weiteren Aspekt wird auch ein Regel- und Steuergerät für ein Heizgerät vorgeschlagen, eingerichtet zur Durchführung eines hier vorgeschlagenen Verfahrens. Das Regel- und Steuergerät kann hierzu beispielsweise einen Prozessor aufweisen, und/ oder über diesen verfügen. In diesem Zusammenhang kann der Prozessor beispielsweise das auf einem Speicher (des Regel- und Steuergeräts) hinterlegte Verfahren ausführen. In vorteilhafter Weise können auf dem Speicher des Regel- und Steuergeräts auch die Referenzdaten zur Durchführung eines hier vorgestellten Verfahrens hinterlegt werden oder sein. Im Rahmen der Verfahrensdurchführung können auf dem Speicher zudem die in Schritt a) erfassten Daten hinterlegt werden.

Nach einem weiteren Aspekt wird auch ein Klimagerät vorgeschlagen, aufweisend ein hier vorgeschlagenes Regel- und Steuergerät. Bei dem Klimagerät handelt sich insbesondere um eine Wärmepumpe oder eine Klimaanlage (bzw. eines Außenteils derselben).

Die im Zusammenhang mit dem Verfahren erörterten Details, Merkmale und vorteilhaften Ausgestaltungen können entsprechend auch bei dem hier vorgestellten Computerprogramm, dem Regel- und Steuergerät und/ oder dem Klimagerät auftreten und umgekehrt. Insoweit wird auf die dortigen Ausführungen zur näheren Charakterisierung der Merkmale vollumfänglich Bezug genommen.

Hier werden somit ein Verfahren zum Überprüfen des Verschleißzustandes von Vibrationsdämpfern eines Klimagerätes, ein Computerprogramm, ein Regel- und Steuergerät und ein Klimagerät angegeben, welche die mit Bezug auf den Stand der Technik geschilderten Probleme zumindest teilweise lösen. Insbesondere tragen das Verfahren zum Überprüfen des Verschleißzustandes von Vibrationsdämpfern eines Klimagerätes, das Computerprogramm, das Regel- und Steuergerät und das Klimagerät zumindest dazu bei, eine automatisierte Feststellung eines Verschleißzustandes von Schwingungsdämpfern des Klimagerätes zu ermöglichen.

Zudem kann die Erfindung besonders einfach umgesetzt werden, da lediglich ein Schwingungssensor gegenüber einem Klimagerät nach dem Stand der Technik vorzusehen ist.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Ablauf eines hier vorgeschlagenen Verfahrens, und
- Fig. 2:: ein hier vorgeschlagenes Klimagerät.

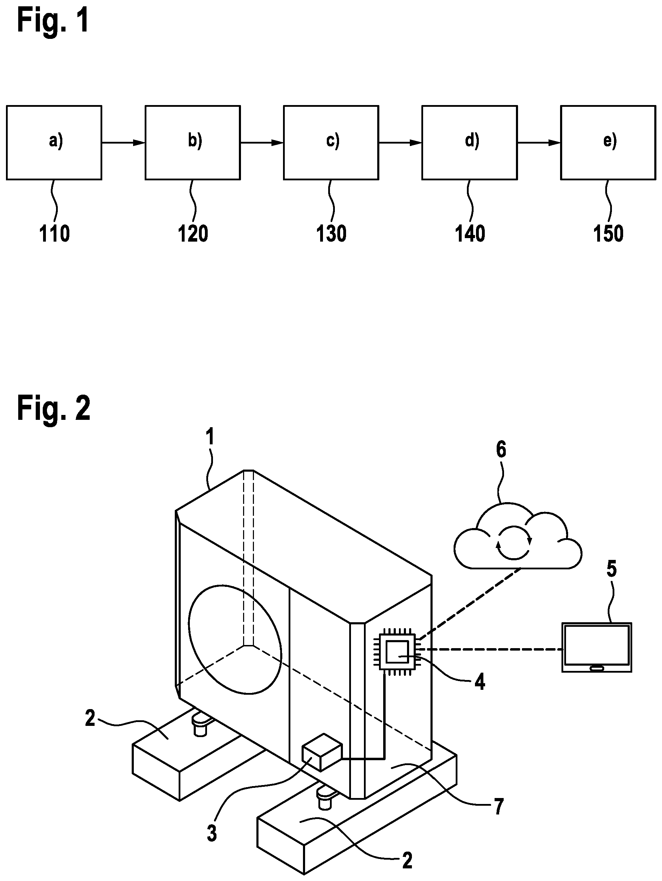

Fig. 1 zeigt beispielhaft und schematisch einen Ablauf eines hier vorgeschlagenen Verfahrens. Das Verfahren dient einem Überprüfen/ Überwachen der Schwingungsdämpfer eines Klimagerätes 1. Die mit Blöcken 110, 120, 130, 140 und 150 dargestellte Reihenfolge der Schritte a), b), c), d) und e) kann sich bei einem regulären Betriebsablauf einstellen.

Fig. 2 zeigt ein hier vorgestelltes Klimagerät 1, hier ausgebildet als ein Außenteil einer Wärmepumpe. Das Klimagerät 1 ist stehend auf zwei Schwingungsdämpfern 2 installiert, wobei die Schwingungsdämpfer 2 das Klimagerät 1 vom Boden entkoppeln. Im Bereich einer Bodenplatte 7 kann ein Schwingungssensor 3 angeordnet sein, der als Beschleunigungssensor ausgebildet sein kann und durch betriebsbedingte Schwingungen/ Vibrationen verursachte Beschleunigungen aufzeichnen kann. Der Schwingungssensor 3 kann mit einem Regel- und Steuergerät 4 des Klimagerätes 1 elektrisch verbunden sein und erfasste Daten übertragen. Das Regel- und Steuergerät 4 kann zur Durchführung eines hier vorgestellten Verfahrens eingerichtet sein und mit einer Anzeigeeinrichtung 5 und einem Netzwerk 6, wie dem Internet, elektrisch verbunden sein und hierüber Informationen zum Abruf bereitstellen bzw. anzeigen oder auch als Nachricht versenden.

In Block 110 kann gemäß Schritt a) ein Erfassen von Daten eines Schwingungssensors 3 beim Betreiben des Klimagerätes 1 erfolgen. Die erfassten Daten können dem Regel- und Steuergerät 4 über die elektrische Verbindung übertragen werden. In einer bevorzugten Ausgestaltung wird das Klimagerät 1 in einem definierten (vorbestimmten) Betriebspunkt betrieben.

In Block 120 kann gemäß Schritt b) ein Vergleichen der in Schritt a) erfassten Daten des Schwingungssensors 3 mit Referenzdaten, erfolgen. Hierfür können anhand der in Schritt a) erfassten Daten insbesondere die Schwingungsamplituden in einem (vordefinierten) Frequenzspektrum ermittelt werden, beispielsweise durch eine Schnelle Fourier Transformation, die gegebenenfalls durch das Regel- und Steuergerät 4 durchführbar ist. Die Referenzdaten können auf einem Speicher des Regel- und Steuergerätes 4 hinterlegt sein und bei der Durchführung des Vergleiches können die Schwingungsamplituden in dem Frequenzbereich verglichen werden.

Im Ergebnis des Vergleiches in Block 120 (Schritt b) kann in einem Block 130 gemäß Schritt c) ein Feststellen des Verschleißzustandes der Schwingungsdämpfer 2 erfolgen.

In Block 140 kann gemäß einem optionalen Schritt d) ein Zeitpunkt für einen Austausch der Schwingungsdämpfer (2) bestimmt werden. Der Zeitpunkt kann anhand einer Betrachtung der Entwicklung des Verschleißzustandes vorheriger Verfahrensdurchläufe und von Erfahrungswerten abgeschätzt werden.

In Block 150 kann gemäß einem optionalen Schritt e) eine Information über den in Schritt c) (Block 130) festgestellten Verschleißzustand der Schwingungsdämpfer 2 und/ oder gegebenenfalls über den in Schritt d) ermittelten Zeitpunkt für einen Austausch der Schwingungsdämpfer 2 über ein Netzwerk 6 zum Abruf bereitgestellt und/ oder als Nachricht versandt werden und/ oder über eine Anzeigeeinrichtung 5 angezeigt werden.

### Bezugszeichenliste

- 1: Klimagerät
- 2: Schwingungsdämpfer
- 3: Schwingungssensor
- 4: Regel- und Steuergerät
- 5: Anzeigeeinrichtung
- 6: Netzwerk
- 7: Bodenplatte

## Patentansprüche

1. Computerimplementiertes Verfahren zum Überprüfen des Verschleißzustandes von Schwingungsdämpfern (2) eines Klimagerätes (1), angeordnet zwischen dem Klimagerät (1) und einer Installationsschnittstelle, umfassend zumindest die folgenden Schritte:
a) Erfassen von Daten eines Schwingungssensors (3) beim Betreiben des Klimagerätes (1),
b) Vergleichen der in Schritt a) erfassten Daten des Schwingungssensors (3) mit Referenzdaten,
c) Im Ergebnis des Vergleiches gemäß Schritt b) erfolgt ein Feststellen des Verschleißzustandes der Schwingungsdämpfer (2).

2. Verfahren nach Anspruch 1, wobei bei der Durchführung des Schrittes a) das Klimagerät (1) in einem Referenzbetriebspunkt betrieben wird.

3. Verfahren nach einem der vorangehenden Ansprüche, wobei in Schritt a) Daten eines im Bereich einer Bodenplatte (7) des Klimagerätes (1) angeordneten Schwingungssensors (3) erfasst werden.

4. Verfahren nach einem der vorangehenden Ansprüche, wobei anhand der in Schritt a) erfassten Daten die Schwingungsamplituden in einem vordefinierten Frequenzspektrum ermittelt werden und für den Vergleich in Schritt b) herangezogen werden.

5. Verfahren nach einem der vorangehenden Ansprüche, wobei in einem Schritt d) ein Zeitpunkt für einen Austausch der Schwingungsdämpfer (2) bestimmt wird.

6. Verfahren nach einem der vorangehenden Ansprüche, wobei in einem Schritt e) eine Information über den in Schritt c) festgestellten Verschleißzustand der Schwingungsdämpfer (2) und/ oder gegebenenfalls über den in Schritt d) ermittelten Zeitpunkt für einen Austausch über ein Netzwerk (6) zum Abruf bereitgestellt und/ oder als Nachricht versendet wird.

7. Regel- uns Steuergerät (4) für ein Klimageräte (1) umfassend mindestens einem Schwingungssensor (3), eingerichtet zur Durchführung eines Verfahrens nach einem der der Ansprüche 1 bis 6.

8. Klimagerät (1), aufweisend ein Regel- und Steuergerät (4) nach Anspruch 8.

9. Klimagerät (1) nach Anspruch 8, aufweisend mindestens einen Schwingungssensor (3).

10. Computerprogrammprodukt, umfassend Befehle, die ein Regel- und Steuergerät (4) nach Anspruch 7 dazu veranlassen, ein Verfahren nach einem der Ansprüche 1 bis 6 zu durchzuführen.

## Claims

1. Computer-implemented method for checking the state of wear of vibration dampers (2) of an air conditioner (1), arranged between the air conditioner (1) and an installation interface, comprising at least the following steps:
a) acquiring data from a vibration sensor (3) during operation of the air conditioner (1),
b) comparing the data of the vibration sensor (3) recorded in step a) with reference data,
c) As a result of the comparison according to step b), the state of wear of the vibration dampers (2) is determined.

2. The method according to claim 1, wherein the air conditioner (1) is operated at a reference operating point when step a) is carried out.

3. Method according to one of the preceding claims, wherein in step a) data of a vibration sensor (3) arranged in the region of a base plate (7) of the air conditioning device (1) is recorded.

4. Method according to one of the preceding claims, wherein the vibration amplitudes in a predefined frequency spectrum are determined on the basis of the data recorded in step a) and are used for the comparison in step b).

5. Method according to one of the preceding claims, wherein in a step d) a time for an exchange of the vibration dampers (2) is determined.

6. Method according to one of the preceding claims, wherein in a step e) information about the state of wear of the vibration dampers (2) determined in step c) and/or optionally about the time determined in step d) is provided for exchange via a network (6) for retrieval and/or is sent as a message.

7. A regulating and control device (4) for an air-conditioning appliance (1) comprising at least one vibration sensor (3), arranged for carrying out a method according to any one of claims 1 to 6.

8. Air conditioner (1), comprising a regulating and control device (4) according to claim 8.

9. Air conditioner (1) according to claim 8, comprising at least one vibration sensor (3).

10. A computer program product comprising instructions that cause a regulation and control device (4) according to claim 7 to perform a method according to any one of claims 1 to 6.

## Revendications

1. Procédé mis en œuvre par ordinateur de vérification de l'état d'usure d'amortisseurs de vibrations (2) d'un appareil de climatisation (1), agencés entre l'appareil de climatisation (1) et une interface d'installation, comprenant au moins les étapes suivantes :
a) la détection de données d'un capteur de vibrations (3) lors du fonctionnement de l'appareil de climatisation (1),
b) la comparaison des données saisies à l'étape a) du capteur de vibrations (3) avec des données de référence,
c) à la suite de la comparaison selon l'étape b), une constatation de l'état d'usure des amortisseurs de vibrations (2) est effectuée.

2. Procédé selon la revendication 1, dans lequel, lors de la mise en œuvre de l'étape a), l'appareil de climatisation (1) fonctionne dans un point de fonctionnement de référence.

3. Procédé selon l'une quelconque des revendications précédentes, dans lequel à l'étape a), des données d'un capteur de vibrations (3) agencé dans la zone d'une plaque de fond (7) de l'appareil de climatisation (1) sont saisies.

4. Procédé selon l'une quelconque des revendications précédentes, dans lequel, à l'aide des données détectées à l'étape a), les amplitudes de vibrations sont déterminées dans un spectre de fréquences prédéfini et sont utilisées pour la comparaison à l'étape b).

5. Procédé selon l'une quelconque des revendications précédentes, dans lequel dans une étape d), un moment est déterminé pour un remplacement de l'amortisseur de vibrations (2).

6. Procédé selon l'une quelconque des revendications précédentes, dans lequel dans une étape e), une information sur l'état d'usure de l'amortisseur de vibrations (2) constaté à l'étape c) et/ou éventuellement sur le moment déterminé à l'étape d) pour un remplacement est mise à disposition pour consultation et/ou envoyée comme message via un réseau.

7. Appareil de régulation et de commande (4) pour un appareil de climatisation (1) comprenant au moins un capteur de vibrations (3) configuré pour la mise en œuvre d'un procédé selon l'une quelconque des revendications 1 à 6.

8. Appareil de climatisation (1) présentant un appareil de régulation et de commande (4) selon la revendication 8.

9. Appareil de climatisation (1) selon la revendication 8 présentant au moins un capteur de vibrations (3).

10. Produit de programme informatique comprenant des instructions qui amènent un appareil de régulation et de commande (4) selon la revendication 7 à mettre en œuvre un procédé selon l'une quelconque des revendications 1 à 6.
